# EUROPEAN PATENT APPLICATION

(11) **EP 4 579 873 A1**
(43) Date of publication of application: **02.07.2025**
(21) Application number: 23865678.9
(22) Date of filing: 29.06.2023
(51) Int. Cl.: H01M 10/54, C22B 26/12, B01J 8/24, B01J 8/18, C22B 23/00, C22B 47/00

(54) **FLUIDIZED BED REACTOR AND METHOD FOR RECOVERING ACTIVE METAL OF LITHIUM SECONDARY BATTERY BY USING SAME**

(30) Priority: 13.09.2022 KR 20220115012
(71) Applicant: SK innovation Co., Ltd., Seoul 03188 (KR)
(72) Inventor: SON, Sung Real, Daejeon 34124 (KR); KANG, Haeng Goo, Daejeon 34124 (KR); KIM, Byung Soo, Daejeon 34124 (KR); KIM, Ji Min, Daejeon 34124 (KR); CHANG, Byoung Mu, Daejeon 34124 (KR)
(74) Representative: Thoma, Michael
(86) International application number: PCT/KR2023/009102
(87) International publication number: WO 2024/058374

(57) **Abstract**

A method for recovering active metals of a lithium secondary battery may supply a cathode active material mixture to a fluidized bed reactor including a reactor body. A reaction gas may be introduced from a lower portion of the fluidized bed reactor to form a fluidized bed including a preliminary precursor mixture within the reactor body. The fluidized bed portion that has entered the upper portion of the fluidized bed reactor may be cooled to descend it into the reactor body, and then a lithium precursor may be recovered from the preliminary precursor mixture. Accordingly, a terminal velocity of the preliminary precursor is reduced, such that even if the particle size of the preliminary precursor is fine, loss due to scattering may be prevented.

## Description

### [Technical Field]

The present disclosure relates to a fluidized bed reactor and a method for recovering active metals of a lithium secondary battery using the same, and more specifically, to a fluidized bed reactor capable of performing a dry reaction by flowing particles and a method for recovering active metals of a lithium secondary battery using the fluidized bed reactor.

### [Background Art]

Recently, a secondary battery is widely applied and developed as a power source of portable electronic telecommunication devices such as a camcorder, a mobile phone, a laptop computer, etc., and vehicles such as a hybrid car, an electric car, etc. As the secondary battery, a lithium secondary battery has a high operating voltage and a high energy density per unit weight, and is advantageous in terms of a charging velocity and light weight, such that it has been actively developed and applied to various fields.

Lithium metal oxide may be used as an active material for a cathode of the lithium secondary battery. The lithium metal oxide may further contain a transition metal such as nickel, cobalt and manganese.

As the above-described expensive valuable metals are used for the active material for a cathode, 20% or more of manufacturing costs is required to manufacture the cathode material. In addition, as the environmental protection issue is recently emerging, research on a method for recovering the active material for a cathode is being conducted.

Conventionally, a method for sequentially recovering valuable metals by leaching a waste cathode active material in a strong acid such as sulfuric acid has been used, but the wet process is disadvantageous in terms of regeneration selectivity and regeneration time, and may cause environmental pollution. Therefore, a method for recovering valuable metals by using a dry-based reaction through contact them with a reaction gas is being studied.

However, as a size of the cathode active material particles supplied for the dry reaction becomes finer, flow control of the active material particles may not be substantially managed.

### [Summary of Invention]

### [Problems to be Solved by Invention]

An object of the present disclosure is to provide a fluidized bed reactor having improved reaction yield and reaction reliability.

Another object of the present disclosure is to provide a method for recovering active metals of a lithium secondary battery using the fluidized bed reactor.

### [Means for Solving Problems]

In a method for recovering active metals of a lithium secondary battery according to embodiments of the present disclosure, a cathode active material mixture may be supplied to a fluidized bed reactor including a reactor body. A reaction gas may be introduced from a lower portion of the fluidized bed reactor to form a fluidized bed including a preliminary precursor mixture within the reactor body. The fluidized bed portion that has entered the upper portion of the fluidized bed reactor may be cooled to descend it into the reactor body. A lithium precursor may be recovered from the preliminary precursor mixture.

In some embodiments, the fluidized bed reactor may include an expansion chamber communicated with the reactor body, and an intermediate part formed between the reactor body and the expansion chamber to connect them, and cooling the fluidized bed portion may be performed within the expansion chamber.

In some embodiments, cooling the fluidized bed portion may be performed through a cooling jacket which surrounds an outer wall of the expansion chamber.

In some embodiments, cooling the fluidized bed portion may be performed through a cooling coil or cooling fins disposed inside the expansion chamber.

In some embodiments, cooling the fluidized bed portion may include bringing the cooling coil into contact with the fluidized bed portion that has ascended to the expansion chamber.

In some embodiments, cooling the fluidized bed portion may include directly injecting a coolant into the expansion chamber.

In some embodiments, the intermediate part may include an inclined side wall extending from an end of the reactor body to the expansion chamber.

In some embodiments, an internal temperature of the expansion chamber may be maintained lower than that of the reactor body.

In some embodiments, the internal temperature of the expansion chamber may be 20 to 300°C, and the internal temperature of the reactor body may be 400 to 700°C.

In some embodiments, cooling the fluidized bed portion that has entered the upper portion of the fluidized bed reactor may include reducing a moving velocity of particles included in the preliminary precursor mixture to a terminal velocity or less.

A fluidized bed reactor according to exemplary embodiments may include a reactor body, an expansion chamber connected to an end of the reactor body and having a width greater than that of the reactor body, and a coolant injection port fixed to an upper surface of the expansion chamber to directly inject a coolant to a reactant.

In some embodiments, the fluidized bed reactor may further include an intermediate part which is formed between the reactor body and the expansion chamber to connect them, and includes an inclined side wall.

In some embodiments, an inclination angle between an imaginary vertical line extended from the inner wall of the reactor body and the inclined side wall may be 30° to 80°.

In some embodiments, the fluidized bed reactor may further include a reactor lower portion connected to a bottom portion of the reactor body, a fluid inlet configured to inject a reaction gas into the reactor lower portion, and a fluid outlet connected to the expansion chamber to discharge the reaction gas.

In some embodiments, the fluidized bed reactor may further a dispersion plate which divides the reactor lower portion and the reactor body.

### [Advantageous effects]

The fluidized bed reactor according to exemplary embodiments may use the cooling unit to cool the upper portion of the fluidized bed reactor. As the upper portion of the fluidized bed reactor is cooled, a loss of the preliminary precursor mixture to an outside of the fluidized bed reactor due to a high velocity of ascending fluidized bed may be minimized.

In some embodiments, the fluidized bed reactor may include an expansion chamber at the upper portion thereof. In this case, a movement space of the preliminary precursor mixture that has entered the expansion chamber may be expanded, such that the velocity when ascending may be decreased. In addition, the expansion chamber may include a cooling unit such that the temperature inside the expansion chamber may be rapidly reduced. Further, the preliminary precursor mixture may be scattered to participate again in the fluidized bed reaction. Accordingly, the reduction efficiency and the lithium precursor yield within the fluidized bed may be improved.

### [Brief Description of Drawings]

FIG. 1 is a schematic view for describing a fluidized bed reactor and a method for recovering active metals of a lithium secondary battery using the same according to exemplary embodiments.
FIGS. 2 to 5 are schematic cross-sectional views illustrating a fluidized bed reactor according to exemplary embodiments.
FIG. 6 is a schematic view for describing flow characteristics within the fluidized bed reactor.

### [Mode for Carrying out Invention]

The embodiments of the present disclosure provide a fluidized bed reactor which includes an upper cooling section and a method for recovering active metals of a lithium secondary battery using the fluidized bed reactor.

Hereinafter, the present disclosure will be described in detail through embodiments with reference to the accompanying drawings. However, the embodiments are merely illustrative and the present disclosure is not limited to the specific embodiments described by way of example.

As used herein, the term "precursor" is used to comprehensively refer to a compound including specific metals to provide the specific metals included in the electrode active material.

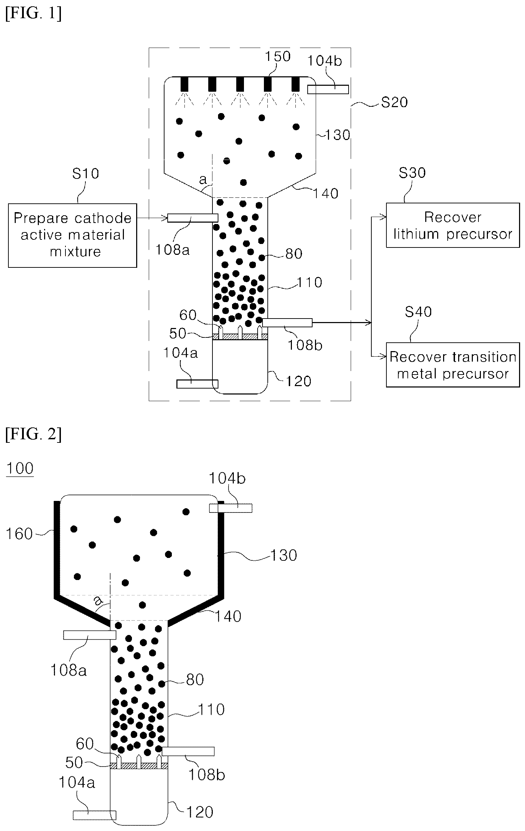

FIG. 1 is a schematic view for describing a fluidized bed reactor and a method for recovering active metals of a lithium secondary battery using the same according to exemplary embodiments.

For the convenience of description, FIG. 1 shows a process flowchart and a schematic cross-section of the fluidized bed reactor together.

Referring to FIG. 1, a cathode active material mixture may be prepared from a cathode of a lithium secondary battery (e.g., process S10).

The lithium secondary battery may include an electrode assembly including a cathode, an anode and a separation member interposed between the cathode and the anode. The cathode and the anode may include a cathode active material layer and an anode active material layer coated on a cathode current collector and an anode current collector, respectively.

For example, a cathode active material included in the cathode active material layer may include an oxide containing lithium and a transition metal.

In some embodiments, the cathode active material may include a compound represented by Formula 1:

[Formula 1] LiₓM1ₐM2₆M3_{c}O_{y}

In Formula 1, M1, M2 and M3 may be a transition metal selected from Ni, Co, Mn, Na, Mg, Ca, Ti, V, Cr, Cu, Zn, Ge, Sr, Ag, Ba, Zr, Nb, Mo, Al, Ga or B. In the Formula 1, x, y, a, b and c may satisfy 0<x≤1.1, 2≤y≤2.02, 0<a<1, 0<b<1, 0<c<1, 0<a+b+c≤1.

In some embodiments, the cathode active material may be an NCM-based lithium oxide including nickel, cobalt and manganese.

The cathode may be separated from the lithium secondary battery to recover a cathode. The cathode includes the cathode current collector (e.g., aluminum (Al)) and the cathode active material layer as described above, and the cathode active material layer may include a conductive material and a binder together with the above-described cathode active material.

The conductive material may include, for example, a carbon-based material such as graphite, carbon black, graphene, carbon nanotube or the like. The binder may include, for example, a resin material such as vinylidene fluoride-hexafluoropropylene copolymer (PVDF-co-HFP), polyvinylidene fluoride (PVDF), polyacrylonitrile, polymethyl methacrylate or the like.

According to exemplary embodiments, the recovered cathode may be pulverized to produce a cathode active material mixture. Accordingly, the cathode active material mixture may be manufactured in the form of powder. The cathode active material mixture includes powder of a lithium-transition metal oxide as described above, and may include, for example, the NCM-based lithium oxide powder (e.g., Li(NCM)O₂).

As used herein, the term "cathode active material mixture" may refer to a raw material which is input into a fluidized bed reaction treatment to be described below after the cathode current collector is substantially removed from the cathode. In one embodiment, the cathode active material mixture may include cathode active material particles such as the NCM-based lithium oxide. In one embodiment, the cathode active material mixture may also include some components derived from the binder or the conductive material. In one embodiment, the cathode active material mixture may be substantially composed of the cathode active material particles.

In some embodiments, the cathode active material mixture may have an average particle diameter (D50) of 5 to 100 µm. Within the above range, the lithium-transition metal oxide such as Li(NCM)O₂ to be recovered may be easily separated from the cathode current collector, the conductive material and the binder included in the cathode active material mixture.

In some embodiments, the cathode active material mixture may be subjected to heat treatment before inputting it into the fluidized bed reactor to be described below. By the heat treatment, impurities such as the conductive material and the binder included in the cathode active material mixture may be removed or reduced. Thereby, the lithium-transition metal oxide may be input into the fluidized bed reactor with high purity.

The heat treatment may be performed at a temperature of, for example, about 100 to 500°C, or about 350 to 450°C. Within the above range, while the impurities may be substantially removed, decomposition and damage of the lithium-transition metal oxide may be prevented.

For example, in process S20, the cathode active material mixture may be reacted with a reaction gas within a fluidized bed reactor 100 to form a preliminary precursor mixture 80.

As illustrated in FIG. 1, the fluidized bed reactor 100 may include a reactor body 110, a reactor lower portion 120 and an expansion chamber 130. The reactor body 110 may include a heating means such as a heater, or may be integrally formed with the heating means.

The reactor body 110 may have a cylindrical shape. In some embodiments, a side wall of the reactor body 110 may be substantially vertical. For example, the side wall of the reactor body 110 may be erected vertically from an upper surface of a dispersion plate 50.

According to exemplary embodiments, the reaction gas may be introduced into the reactor lower portion 120. In some embodiments, the reactor lower portion 120 may be defined as a portion below the dispersion plate 50 of the fluidized bed reactor 100. For example, the reactor body 110 and the reactor lower portion 120 may be divided by the dispersion plate 50.

The cathode active material mixture may be supplied into the reactor body 110 through a supply passage 108a. The cathode active material mixture may be dropped through the supply passage 108a connected to an upper portion of the reactor body 110. The cathode active material mixture may also be input through a supply passage (not shown) connected to a bottom portion of the reactor body 110.

As described above, the reaction gas may be supplied to the reactor lower portion 120. In some embodiments, the reactor lower portion 120 may include a fluid inlet 104a configured to inject the reaction gas.

The reaction gas may be introduced into the reactor lower portion 120 through the fluid inlet 104a, and supplied into the reactor body 110. According to exemplary embodiments, the reaction gas may be injected from the bottom portion of the reactor body 110 through injection columns 60 included in the dispersion plate 50.

Since the reaction gas is supplied from the lower portion of the fluidized bed reactor 100 and brings into contact with the cathode active material mixture, the cathode active material mixture may react with the reaction gas while moving to the expansion chamber 130 to be converted into the preliminary precursor mixture 80.

The reaction gas may include a reducing gas, for example, hydrogen (H₂). The cathode active material mixture may be reduced by the reaction gas to generate, for example, a preliminary lithium precursor including lithium hydroxide (LiOH), lithium oxide (for example, LiO₂), and a transition metal or transition metal oxide. For example, Ni, Co, NiO, CoO and MnO may be produced together with the preliminary lithium precursor by a reduction reaction.

The reduction reaction in the reactor body 110 may be performed at about 400 to 700°C, or 450 to 550°C. Within the above reaction temperature range, the reduction reaction may be facilitated without causing re-aggregation or recombination of the preliminary lithium precursor and the transition metal/transition metal oxide.

In some embodiments, a carrier gas may be supplied together with the reaction gas from the reactor lower portion 120. For example, the carrier gas may be supplied together with the reaction gas through the fluid inlet 104a.

For example, the carrier gas may include an inert gas such as nitrogen (N₂), argon (Ar), etc. The carrier gas may also be supplied by injecting through the injection columns 60 of the dispersion plate to facilitate the formation of a fluidized bed in which the reduction reaction is performed. For example, the formation of cyclone through the carrier gas may be facilitated.

The fluidized bed is formed within the reactor body 110, and may ascend to enter the upper portion of the fluidized bed reactor 100. According to exemplary embodiments, the preliminary precursor mixture 80 including a preliminary lithium precursor and a preliminary transition metal precursor (e.g., the transition metal or transition metal oxide) may be formed by the reduction reaction in the fluidized bed. The preliminary lithium precursor may include, for example, lithium hydroxide, lithium oxide, and/or lithium carbonate (Li carbonate).

According to exemplary embodiments, the fluidized bed may at least partially enter the expansion chamber 130. The expansion chamber 130 may have a diameter or width greater than that of the reactor body 110. The preliminary precursor mixture 80 particles contained in the portion of the fluidized bed moved into the expansion chamber 130 may descend back into the reactor body 110 while the velocity when ascending is reduced, as a movement space is expanded within the expansion chamber 130.

As the space where the preliminary precursor mixture 80 particles move in the expansion chamber 130 is expanded, the temperature in the expansion chamber 130 may be decreased compared to the temperature in the reactor body 110. According to exemplary embodiments, the fluidized bed reactor 100 may further include a cooling unit coupled with the expansion chamber 130.

The temperature of the fluidized bed portion moved into the expansion chamber 130 may be decreased more quickly by the cooling unit. Accordingly, the preliminary precursor mixture 80 particles scattered into the expansion chamber 130 may be quickly transferred back to the reactor body 110 to participate again in the fluidized bed reaction.

For example, when the velocity of the preliminary precursor mixture 80 particles within the reactor body 110 is increased to a terminal velocity (ut) or more, turbulence may be formed, thereby causing the particles to diffuse into the expansion chamber 130.

According to exemplary embodiments, the moving velocity of the preliminary precursor mixture 80 particles may be rapidly reduced to less than the terminal velocity by the cooling unit. For example, the moving velocity of the preliminary precursor mixture 80 may have a value less than a turbulence fluidizing rate corresponding to the terminal velocity in a turbulence fluidization stage to be described below, thereby effectively reducing an amount of the preliminary precursor mixture 80 flowing out of the reactor body 110.

Accordingly, the amount of the preliminary precursor mixture 80 flowing out of the reactor body 110 may be effectively reduced, and the reduction reaction efficiency and lithium precursor yield in the fluidized bed may be improved.

In some embodiments, the temperature inside the expansion chamber 130 may be maintained lower than the temperature inside the reactor body 110 by the cooling unit. For example, the temperature inside the expansion chamber 130 may be reduced to 300°C or lower, or 150°C or lower by the cooling unit. In one embodiment, the temperature inside the expansion chamber 130 may be reduced to 20°C to 100°C.

Within the above temperature range, a flow rate of the preliminary precursor mixture 80 moving from the reactor body 110 to the expansion chamber 130 may be effectively reduced by a difference in internal temperatures of the reactor body 110 and the expansion chamber 130.

In some embodiments, as shown in FIG. 1, the cooling unit may include a coolant injection port 150 attached or fixed to an inner surface of the expansion chamber 130.

For example, a plurality of coolant injection ports 150 may be attached or fixed to an inner upper surface of the expansion chamber 130. In one embodiment, the coolant injection ports 150 may also be distributed on an inner wall of the expansion chamber 130.

A coolant (e.g., water) may be directly injected from the coolant injection ports 150 into the preliminary precursor mixture 80 existing in the expansion chamber 130. Accordingly, cooling efficiency may be improved while the preliminary precursor mixture 80 brings into direct contact with the coolant. In addition, the preliminary precursor mixture 80 may quickly descend into the reactor body 110 by a force of the coolant injected from the inner upper surface of the expansion chamber 130.

The coolant injection port 150 may directly inject the coolant into the preliminary precursor mixture 80 that has entered the expansion chamber 130. The coolant may bring into direct contact with the preliminary precursor mixture 80, such that the preliminary precursor mixture 80 particles may be aggregated with each other by means of the coolant.

In some embodiments, when the internal temperature of the expansion chamber 130 is increased to a predetermined temperature or more, cooling by the cooling unit may be performed. For example, when the internal temperature of the expansion chamber 130 exceeds 300°C, the coolant injection ports 150 may inject the coolant into the preliminary precursor mixture 80. In one embodiment, when the internal temperature of the expansion chamber 130 exceeds 150°C, the coolant injection ports 150 may inject the coolant into the preliminary precursor mixture 80.

Accordingly, an increasing rate of the temperature of the preliminary precursor mixture 80 that has entered the expansion chamber 130 may be suppressed without excessive injection of the coolant. Therefore, the preliminary precursor mixture 80 may re-enter the reactor body 110.

Volume and mass of the agglomerated preliminary precursor mixture 80 may be increased, thereby increasing the terminal velocity. In addition, the moving velocity of the agglomerated preliminary precursor mixture 80 may be reduced. In this case, the moving velocity of the agglomerated preliminary precursor mixture 80 may be rapidly reduced to less than the terminal velocity. Accordingly, the amount of the preliminary precursor mixture 80 flowing out of the reactor body 110 may be reduced, thereby effectively improving a recovery rate of the preliminary precursor mixture 80.

In some embodiments, the expansion chamber 130 may have a diameter larger than that of the reactor body 110. The diameter may be measured based on a central axis of the fluidized bed reactor 100 and an inner wall of the fluidized bed reactor 100. In this case, a deceleration effect of the preliminary precursor mixture 80 or the reaction gas moving from the reactor body 110 to the expansion chamber 130 may be maximized.

The fluidized bed reactor 100 may further include an intermediate part 140 formed between the reactor body 110 and the expansion chamber 130 to connect them. The intermediate part 140 may mean a region where the diameter is gradually increased from an end of the reactor body 110 at a predetermined inclination angle a to be extended to the expansion chamber 130 as the diameter of the expansion chamber 130 becomes larger than that of the reactor body 110. For example, the inclination angle (a) may be defined as the angle formed between a line extending in a direction perpendicular to the side of the reactor body (110) and the inclined surface of the intermediate portion (140).

In some embodiments, the inclination angle a of the intermediate part 140 may be 30 to 80°. In one embodiment, the inclination angle a of the intermediate part 140 may be 45 to 60°. When the inclination angle a satisfies the above range, an effective deceleration effect of the preliminary precursor mixture 80 may be expected within a range where the region of the expansion chamber 130 included in the fluidized bed reactor 100 is not unnecessarily increased.

In addition, as the decelerating and descending preliminary precursor mixture 80 is flown again into the reactor body 110 along the inclined surface of the intermediate part 140, the recovery efficiency of the lithium precursor may be further improved.

For example, in process S30, the lithium precursor may be selectively recovered from the preliminary precursor mixture 80.

In some embodiments, the preliminary lithium precursor may be recovered by washing the preliminary precursor mixture 80 with water. Through the water washing treatment, the preliminary lithium precursor particles in the form of lithium hydroxide (LiOH) may be substantially dissolved in water and separated from the transition metal precursor to be recovered first. A lithium precursor substantially composed of lithium hydroxide may be obtained through a crystallization process, etc. of the lithium hydroxide dissolved in water.

In some embodiments, the preliminary lithium precursor particles in the form of lithium oxide and lithium carbonate may be substantially removed through the water washing treatment.

In some embodiments, the preliminary lithium precursor particles in the form of lithium oxide and lithium carbonate may be at least partially converted into lithium hydroxide through the water washing treatment.

In some embodiments, lithium carbonate (e.g., Li₂CO₃) may be obtained as a lithium precursor by reacting the preliminary lithium precursor with a carbon-containing gas such as carbon monoxide (CO), carbon dioxide (CO₂), etc. A crystallized lithium precursor may be obtained through a reaction with the carbon-containing gas. For example, lithium carbonate may be collected by injecting the carbon-containing gas together during the water washing treatment.

For example, in process S40, a transition metal precursor may be obtained from the collected preliminary transition metal precursor.

For example, the preliminary lithium precursor is collected through a outlet 108b, and then the preliminary transition metal precursor may be recovered. Thereafter, the preliminary transition metal precursor may be treated with an acid solution to form precursors in the form of acid salts of each transition metal.

In some embodiments, sulfuric acid may be used as the acid solution. In this case, NiSO₄, MnSO₄ and CoSO₄ may be recovered as the transition metal precursors, respectively.

As described above, the lithium precursor is collected through a dry process, and then the transition metal precursors are selectively extracted using the acid solution, such that purity and selectivity of the respective metal precursors may be improved, and a load of the wet process may be decreased, thereby reducing an increase in wastewater and byproducts.

FIGS. 2 to 5 are schematic cross-sectional views illustrating a fluidized bed reactor according to exemplary embodiments. The structures and configurations of the fluidized bed reactor, which are substantially the same as or similar to those of the fluidized bed reactor described with reference to FIG. 1, will not be described in detail.

Referring to FIG. 2, the cooling unit may include a cooling jacket 160.

The cooling jacket 160 may at least partially surround an outer wall of the expansion chamber 130. In one embodiment, the cooling jacket 160 may entirely surround the outer wall of the expansion chamber 130.

The coolant may flow inside the cooling jacket 160 to reduce the temperature inside the expansion chamber 130. Accordingly, the moving velocity of the preliminary precursor mixture 80 may be reduced to less than the terminal velocity, thereby effectively reducing the amount of the preliminary precursor mixture 80 flowing out of the reactor body 110.

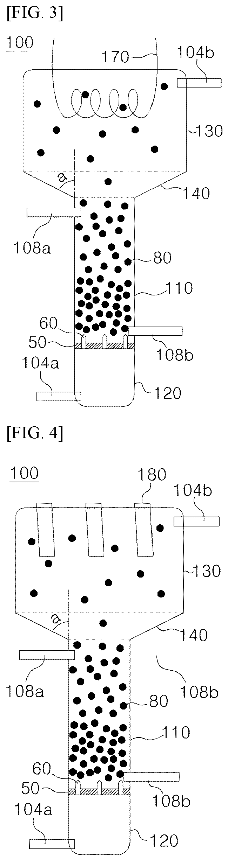

Referring to FIG. 3, the cooling unit may include a cooling coil 170. Also, referring to FIG. 4, the cooling unit may include cooling fins 180.

The cooling coil 170 or cooling fins 180 may be disposed inside the expansion chamber 130.

The cooling coil 170 or cooling fins 180 may bring into direct contact with the preliminary precursor mixture 80 to reduce the temperature inside the expansion chamber 130. Accordingly, the moving velocity of the preliminary precursor mixture 80 may be reduced to less than the terminal velocity, thereby effectively reducing the amount of the preliminary precursor mixture 80 flowing out of the reactor body 110.

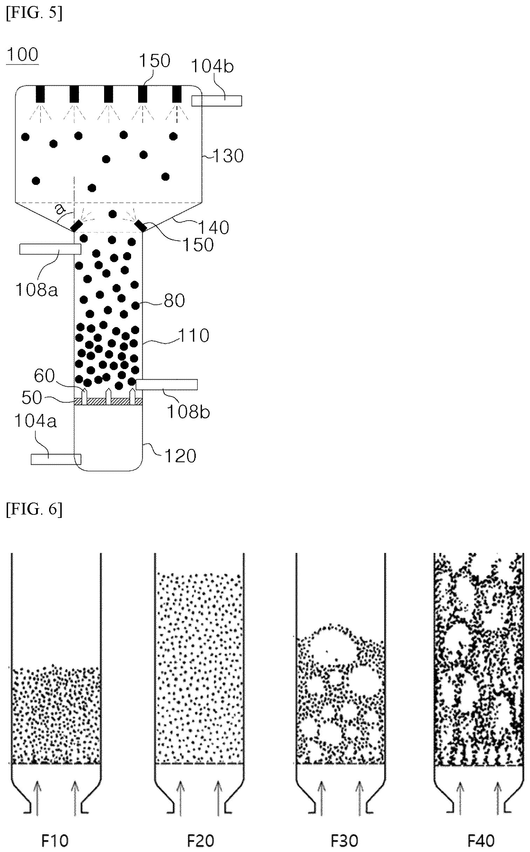

Referring to FIG. 5, the coolant injection ports 150 may be attached to the upper surface of the expansion chamber 130 and an inner portion of the intermediate part 140.

Even when the temperature inside the expansion chamber 130 is maintained at, for example, 300°C or lower by the coolant injection ports 150 formed on the upper surface of the expansion chamber 130, the preliminary precursor mixture 80 may remain inside the intermediate part 140. In this case, the coolant may be directly injected from the coolant injection ports 150 formed on the inner portion of the intermediate part 140 into the preliminary precursor mixture 80 remaining inside the intermediate part 140. Accordingly, the recovery rate of the preliminary precursor mixture 80 may be further improved.

FIG. 6 is a schematic view for describing flow characteristics within the fluidized bed reactor 100.

Referring to FIG. 6, the reaction gas may be introduced into the fluidized bed reactor 100 as indicated by arrows. Through a minimum fluidized bed reaction formation stage (F10) while the reaction gas is introduced, the flow rate of the reaction gas is increased, and an intermediate smooth fluidization stage (F20) may be performed, followed by performing a bubble formation fluidized bed reaction stage (F30).

In the bubble formation fluidized bed reaction step (F30), reaction particles (e.g., the cathode active material mixture) may remain in the fluidized bed reaction layer and not be scattered out of the fluidized bed reaction layer.

According to exemplary embodiments, the flow rate of the reaction gas may be a bubble formation fluidization velocity or more. Accordingly, the formation of a fluidized bed reaction layer with the reaction gas may be facilitated through sufficient dispersion of the cathode active material mixture having a small particle size.

If the flow rate of the reaction gas is further increased, a turbulence fluidization step (F40) may be performed. In this case, fine particles that move individually among the reaction particles may be scattered out of the fluidized bed reaction layer. For example, if the flow rate of the reaction gas is increased to the terminal velocity or more of the reaction particles, the reaction gas and the reaction particles may be mixed more violently and ascend to the upper portion of the fluidized bed reactor, such that it may be substantially difficult to control the reaction.

According to exemplary embodiments, the reaction particles that have ascended to the upper portion of the reactor may be cooled at the upper portion of the fluidized bed reactor. The flow rate of the cooled reaction particles is decreased, and the velocity of the ascending reaction particles may be reduced to the terminal velocity or less. Accordingly, by descending the reaction particles, it is possible to suppress the precursor from being lost to the outside of the fluidized bed reactor together with the reaction gas. In addition, since the reaction particles may repeat the ascending and descending, the reaction particles may sufficiently perform the reaction, thereby improving the recovery yield of the lithium precursor.

Hereinafter, embodiments of the present disclosure will be further described with reference to specific experimental examples. However, the following examples and comparative examples included in the experimental examples are only given for illustrating the present disclosure and those skilled in the art will obviously understand that various alterations and modifications are possible within the scope and spirit of the present disclosure. Such alterations and modifications are duly included in the appended claims.

### Example 1

### (1) Preparation of waste cathode active material mixture

100 kg of a cathode material separated from a waste lithium secondary battery was subjected to heat treatment at 450°C for 1 hour. The heat-treated cathode material was cut into small units, and pulverized through milling to obtain Li-Ni-Co-Mn oxide cathode active material powder.

### (2) Operation of fluidized bed reactor

10 kg of the cathode active material sample was loaded into a fluidized bed reactor including a reactor body and an expansion chamber, and nitrogen gas was injected from the reactor lower portion at a flow rate of 100 L/min to operate the fluidized bed reactor.

The internal temperature of the reactor body was maintained at 450°C, and a cooling unit was installed in the expansion chamber to maintain the internal temperature of the expansion chamber at 80°C. As the cooling unit, coolant injection ports using water as a cooling medium were installed on an inner upper surface of the expansion chamber.

In addition, a fluidized bed reactor whose diameter ratio of the reactor body to the diameter of the expansion chamber is 2 was used.

### Example 2

The fluidized bed reactor was operated in the same manner as in Example 1, except that the cooling unit installed in the expansion chamber was a cooling jacket installed on the outer wall of the expansion chamber.

### Example 3

The fluidized bed reactor was operated in the same manner as in Example 1, except that the cooling unit installed in the expansion chamber was a cooling coil installed inside the expansion chamber.

### Example 4

The fluidized bed reactor was operated in the same manner as in Example 1, except that the cooling unit installed in the expansion chamber was cooling fins installed on the outer wall of the expansion chamber.

### Example 5

The fluidized bed reactor was operated in the same manner as in Example 1, except that the temperature inside the expansion chamber was maintained at 120°C.

### Example 6

The fluidized bed reactor was operated in the same manner as in Example 1, except that the temperature inside the expansion chamber was maintained at 160°C.

### Comparative Example 1

The reaction was conducted in the same manner as in Example 1, except that the cooling unit was not installed in the expansion chamber.

### Experimental Example

An amount of the preliminary precursor mixture that has flown out of the reactor was measured to calculate the flow rate per hour.

**[TABLE 1]**

| Item | Amount of preliminary precursor mixture flowing out of reactor [wt%/h] |
|---|---|
| Example 1 | 0.0 |
| Example 2 | 1.8 |
| Example 3 | 0.9 |
| Example 4 | 0.7 |
| Example 5 | 5.6 |
| Example 6 | 11.4 |
| Comparative Example 1 | 38.7 |

Referring to Table 1, when the cooling unit was installed in the expansion chamber, the amount of the preliminary precursor mixture flowing out and being lost was reduced. According to the examples, when the cooling unit was installed in the expansion chamber, the amount of the preliminary precursor mixture flowing out was reduced by 70% or more compared to the case of not installing the cooling unit.

In Example 6, the temperature inside the expansion chamber was maintained at 150°C or higher. Accordingly, the amount of the preliminary precursor mixture that has flown out of the reactor was increased.

In Comparative Example 1, the cooling unit was not installed in the expansion chamber. Accordingly, the amount of the preliminary precursor mixture that has flown out of the reactor was increased compared to the examples.

The contents described above are merely an example of applying the principle of the present disclosure, and other configurations may be further included without departing from the scope of the present invention.

## Claims

1. A method for recovering active metals of a lithium secondary battery comprising:
supplying a cathode active material mixture to a fluidized bed reactor including a reactor body;
introducing a reaction gas from a lower portion of the fluidized bed reactor to form a fluidized bed including a preliminary precursor mixture within the reactor body;
cooling the fluidized bed portion that has entered the upper portion of the fluidized bed reactor to descend it into the reactor body; and
recovering a lithium precursor from the preliminary precursor mixture.

2. The method for recovering active metals of a lithium secondary battery according to claim 1, wherein the fluidized bed reactor comprises an expansion chamber connected to the reactor body, and an intermediate part formed between the reactor body and the expansion chamber to connect them, and
the step of cooling the fluidized bed portion is performed within the expansion chamber.

3. The method for recovering active metals of a lithium secondary battery according to claim 2, wherein the step of cooling the fluidized bed portion is performed through a cooling jacket which surrounds an outer wall of the expansion chamber.

4. The method for recovering active metals of a lithium secondary battery according to claim 2, wherein the step of cooling the fluidized bed portion is performed through a cooling coil or cooling fins disposed inside the expansion chamber.

5. The method for recovering active metals of a lithium secondary battery according to claim 4, wherein the step of cooling the fluidized bed portion comprises bringing the cooling coil into contact with the fluidized bed portion that has ascended to the expansion chamber.

6. The method for recovering active metals of a lithium secondary battery according to claim 2, wherein the step of cooling the fluidized bed portion comprises directly injecting a coolant into the expansion chamber.

7. The method for recovering active metals of a lithium secondary battery according to claim 2, wherein the intermediate part comprises an inclined side wall extending from an end of the reactor body to the expansion chamber.

8. The method for recovering active metals of a lithium secondary battery according to claim 1, wherein an internal temperature of the expansion chamber is maintained lower than that of the reactor body.

9. The method for recovering active metals of a lithium secondary battery according to claim 8, wherein the internal temperature of the expansion chamber is 20 to 300°C, and the internal temperature of the reactor body is 400 to 700°C.

10. The method for recovering active metals of a lithium secondary battery according to claim 1, wherein the step of cooling the fluidized bed portion that has entered the upper portion of the fluidized bed reactor comprises reducing a moving velocity of particles included in the preliminary precursor mixture to a terminal velocity or less.

11. A fluidized bed reactor comprising:
a reactor body;
an expansion chamber connected to an end of the reactor body and having a width greater than that of the reactor body; and
a coolant injection port fixed to an upper surface of the expansion chamber to directly inject a coolant to a reactant.

12. The fluidized bed reactor according to claim 11, further comprising an intermediate part which is formed between the reactor body and the expansion chamber to connect them, and includes an inclined side wall.

13. The fluidized bed reactor according to claim 12, wherein an inclination angle between an imaginary vertical line extended from the inner wall of the reactor body and the inclined side wall is 30° to 80°.

14. The fluidized bed reactor according to claim 11, further comprising a reactor lower portion connected to a bottom portion of the reactor body, a fluid inlet configured to inject a reaction gas into the reactor lower portion, and a fluid outlet connected to the expansion chamber to discharge the reaction gas.

15. The fluidized bed reactor according to claim 14, further comprising a dispersion plate which divides the reactor lower portion and the reactor body.
